# EUROPÄISCHE PATENTANMELDUNG

(11) **EP 4 187 078 A1**
(43) Veröffentlichungstag der Anmeldung: **31.05.2023**
(21) Anmeldenummer: 22204793.8
(22) Anmeldetag: 31.10.2022
(51) Int. Cl.: F02M 25/08, B60K 15/035, F02M 37/00

(54) **VERFAHREN ZUM BEFÜLLEN EINES BETRIEBSFLÜSSIGKEITSBEHÄLTERS UND BETRIEBSFLÜSSIGKEITSBEHÄLTER ZUM AUSFÜHREN DES VERFAHRENS**

(30) Priorität: 29.11.2021 DE 102021213449
(71) Anmelder: Kautex Textron GmbH & Co. KG, 53229 Bonn (DE)
(72) Erfinder: BENDEN, Steffen, 53332 Bornheim (DE); YU, Yunqing, 51109 Köln (DE); MCGRAW, Eric, 51065 Köln (DE); WIND, Stefan, 53773 Hennef (DE)
(74) Vertreter: Richly & Ritschel Patentanwälte PartG mbB

(57) **Zusammenfassung**

Die vorliegende Erfindung offenbart ein Verfahren zum Befüllen eines Betriebsflüssigkeitsbehälters (10), das eine Reduktion von aus dem Betriebsflüssigkeitsbehälter (10) ausgetriebenen Gasen während eines Befüllvorgangs des Betriebsflüssigkeitsbehälters (10) an die Atmosphäre ermöglicht.

Ferner offenbart die vorliegende Erfindung einen Betriebsflüssigkeitsbehälter (10) zum Ausführen des Verfahrens.

## Beschreibung

Die vorliegende Erfindung betrifft ein Verfahren zum Befüllen eines Betriebsflüssigkeitsbehälters. Ferner betrifft die vorliegende Erfindung einen Betriebsflüssigkeitsbehälter zum Ausführen des Verfahrens. Weiterhin betrifft die Erfindung ein Kraftfahrzeug, welches den Betriebsflüssigkeitsbehälter aufweist.

Während des Befüllvorgangs eines Betriebsflüssigkeitsbehälters mittels einer beispielsweise als Zapfventil ausgebildeten Befüllvorrichtung muss der Betriebsflüssigkeitsbehälter aufgrund der aus dem Betriebsflüssigkeitsbehälterinnenraum ausgetriebenen Gase entlüftet werden, damit eine ungehinderte Befüllung des Betriebsflüssigkeitsbehälters ermöglicht ist. Bei einem beispielsweise als Kraftstoffbehälter ausgebildeten Betriebsflüssigkeitsbehälter sind dabei die an die Atmosphäre ausgetriebenen Gase mit Kohlenwasserstoffen aus dem Kraftstoff beladen.

Aus dem Stand der Technik ist es bekannt, zur Reduktion der aus einem Betriebsflüssigkeitsbehälter ausgetriebenen Gase eine Rezirkulationsleitung vorzusehen, die den Betriebsflüssigkeitsbehälterinnenraum mit dem Einfüllrohr fluidverbindet. Durch Bereitstellung einer entsprechend angeordneten Rezirkulationsleitung wird während eines Befüllvorgangs ein Teil der aus dem Betriebsflüssigkeitsbehälter ausgetriebenen Gase über die Rezirkulationsleitung in das Einfüllrohr geleitet, so dass während des Befüllvorgangs weniger Umgebungsluft in den Betriebsflüssigkeitsbehälter eingezogen wird.

Bei diesem aus dem Stand der Technik bekannten Betriebsflüssigkeitsbehälter besteht jedoch weiterhin das Problem, dass in Abhängigkeit der Befüllrate, d.h. der pro Zeiteinheit in den Betriebsflüssigkeitsbehälter eingefüllten Betriebsflüssigkeitsmenge, eine erhebliche Menge von aus dem Betriebsflüssigkeitsbehälter ausgetriebenen Gas entweder über die Entlüftungsleitung oder über das Einfüllrohr an die Atmosphäre gelangt.

Die der vorliegenden Erfindung zugrundeliegende Aufgabe ist die Bereitstellung eines Verfahrens zum Befüllen eines Betriebsflüssigkeitsbehälters, das eine Reduktion von aus dem Betriebsflüssigkeitsbehälter ausgetriebenen Gasen während eines Befüllvorgangs des Betriebsflüssigkeitsbehälters an die Atmosphäre ermöglicht.

Die der vorliegenden Erfindung zugrundeliegende Aufgabe wird durch ein Verfahren mit den Merkmalen des Anspruchs 1 gelöst. Vorteilhafte Ausgestaltungen des Verfahrens sind in den von Anspruch 1 abhängigen Ansprüchen beschrieben.

Im Genaueren wird die der vorliegenden Erfindung zugrundeliegende Aufgabe durch ein Verfahren zum Befüllen eines Betriebsflüssigkeitsbehälters gelöst, wobei der Betriebsflüssigkeitsbehälter zumindest einen Betriebsflüssigkeitsbehälterinnenraum aufweist, der über ein Einfüllrohr mit einer Betriebsflüssigkeit befüllbar ist, und wobei der Betriebsflüssigkeitsbehälterinnenraum mittels einer Rezirkulationsleitung mit dem Einfüllrohr fluidverbunden ist, und wobei der Betriebsflüssigkeitsbehälter ein elektrisch steuerbares Ventil aufweist, das in der Rezirkulationsleitung angeordnet ist und zwischen einer Offenstellung und einer Schließstellung verstellbar ist, und wobei der Betriebsflüssigkeitsbehälter eine Entlüftungsleitung aufweist, die den Betriebsflüssigkeitsbehälterinnenraum zumindest mittelbar mit der Atmosphäre fluidverbindet. Das Verfahren weist dabei die folgenden Verfahrensschritte auf:
- Ermitteln einer Befüllrate während eines Befüllvorgangs des Betriebsflüssigkeitsbehälters;
- Ermitteln eines Soll-Öffnungsgrades des elektrisch steuerbaren Ventils in Abhängigkeit der Befüllrate; und
- Einstellen des Öffnungsgrades des elektrisch steuerbaren Ventils auf den Soll-Öffnungsgrad.

Das erfindungsgemäße Verfahren weist den Vorteil auf, dass die während eines Befüllvorgangs aus dem Betriebsflüssigkeitsbehälter ausgetriebene Menge an mit gasförmigen Bestandteilen der Betriebsflüssigkeit beladenen Luft an die Atmosphäre oder in eine Aktivkohlefiltereinrichtung reduziert wird. Denn durch die Steuerung des Öffnungsgrads des elektrisch steuerbaren Ventils kann der aus dem Betriebsflüssigkeitsbehälter ausgetriebene Gasvolumenstrom, der aus dem Betriebsflüssigkeitsbehälterinnenraum über die Rezirkulationsleitung und über das Einfüllrohr wieder in den Betriebsflüssigkeitsbehälterinnenraum zurückgeführt wird, in Abhängigkeit der Befüllrate, mit der der Betriebsflüssigkeitsbehälter mit Betriebsflüssigkeit befüllt wird, so gesteuert werden, dass eine minimierte Menge an frischer Umgebungsluft über das Einfüllrohr in den Betriebsflüssigkeitsbehälter eingesaugt wird, und dass eine minimierte Menge von aus dem Betriebsflüssigkeitsbehälter ausgetriebenen Gas über die Entlüftungsleitung an die Atmosphäre oder an eine Aktivkohlefiltereinrichtung, das mittels der Entlüftungsleitung mit dem Betriebsflüssigkeitsbehälterinnenraum fluidverbunden ist, abgegeben wird, und dass eine über das Einfüllrohr an die Atmosphäre ausgetriebene Gasmenge minimiert wird.

Der Betriebsflüssigkeitsbehälter ist beispielsweise ein in einem Kraftfahrzeug einzubauender Betriebsflüssigkeitsbehälter. Der Betriebsflüssigkeitsbehälter kann beispielsweise als Kraftfahrzeugtank ausgebildet sein. Ferner kann der Betriebsflüssigkeitsbehälter auch als SCR-Behälter oder auch als Öl-Behälter ausgebildet sein. Erfindungsgemäß bestehen diesbezüglich keine Einschränkungen.

Der Betriebsflüssigkeitsbehälter weist vorzugsweise eine Aktivkohlefiltereinrichtung auf, die mittels der Entlüftungsleitung mit dem Betriebsflüssigkeitsbehälterinnenraum fluidverbunden ist, so dass der Betriebsflüssigkeitsbehälterinnenraum mittels der Aktivkohlefiltereinrichtung mit der Atmosphäre fluidverbunden ist.

Das elektrisch steuerbare Ventil ist beispielsweise als Proportionalventil ausgebildet. Das elektrisch steuerbare Ventil ist beispielsweise kontinuierlich zwischen einer Offenstellung und einer Schließstellung verstellbar.

Das elektrisch steuerbare Ventil kann auch als erstes Ventil oder als Rezirkulationsventil bezeichnet werden.

Unter einer Befüllrate ist ein Volumen pro Zeiteinheit zu verstehen, das über das Einfüllrohr in den Betriebsflüssigkeitsbehälterinnenraum eingefüllt wird.

Vorzugsweise ist das Verfahren für einen Füllstandsensor aufweisenden Betriebsflüssigkeitsbehälter derart ausgebildet, dass das Ermitteln der Befüllrate unter Verwendung von den Füllstand des Betriebsflüssigkeitsbehälters repräsentierenden Daten, die durch den Füllstandsensor bereitgestellt werden, erfolgt.

Das entsprechend ausgebildete Verfahren ermöglicht eine besonders einfache Bestimmung der Befüllrate, mit der der Betriebsflüssigkeitsbehälter befüllt wird.

Die Befüllrate wird beispielsweise durch eine Änderung eines Füllvolumens der sich im Betriebsflüssigkeitsbehälterinnenraum befindlichen Betriebsflüssigkeit pro Zeiteinheit bestimmt. Folglich gibt die Befüllrate das Einfüllvolumen pro Zeiteinheit an.

Vorzugsweise ist das Verfahren für einen in der Entlüftungsleitung angeordnetes zweites Ventil aufweisenden Betriebsflüssigkeitsbehälter derart ausgebildet, dass ein Soll-Öffnungsgrad des zweiten Ventils in Abhängigkeit der Befüllrate ermittelt wird, und dass der Öffnungsgrad des zweiten Ventils auf den Soll-Öffnungsgrad eingestellt wird.

Das zweite Ventil ist beispielsweise als elektrisch steuerbares Ventil, und weiter beispielsweise als Proportionalventil ausgebildet und vorzugsweise zwischen einer Offenstellung und einer Schließstellung verstellbar. Dabei ist das zweite Ventil zwischen der Offenstellung und der Schließstellung beispielsweise kontinuierlich verstellbar.

Das zweite Ventil kann auch als Entlüftungsventil bezeichnet werden.

Vorzugsweise ist das Verfahren derart ausgebildet, dass bei Detektierung eines Befüllvorgangs das zweite Ventil auf einen vorbestimmten und beispielsweise konstanten Öffnungsgrad eingestellt wird.

Vorzugsweise ist das Verfahren derart ausgebildet, dass bei Detektierung eines Befüllstops das zweite Ventil geschlossen wird.

Die der vorliegenden Erfindung zugrundeliegende Aufgabe wird ferner durch ein Verfahren zum Befüllen eines Betriebsflüssigkeitsbehälters gelöst, wobei der Betriebsflüssigkeitsbehälter zumindest einen Betriebsflüssigkeitsbehälterinnenraum aufweist, der über ein Einfüllrohr mit einer Betriebsflüssigkeit befüllbar ist, und wobei der Betriebsflüssigkeitsbehälterinnenraum mittels einer Rezirkulationsleitung mit dem Einfüllrohr fluidverbunden ist, und wobei der Betriebsflüssigkeitsbehälter ein elektrisch steuerbares Ventil aufweist, das in der Rezirkulationsleitung angeordnet ist und zwischen einer Offenstellung und einer Schließstellung verstellbar ist, und wobei der Betriebsflüssigkeitsbehälter eine Entlüftungsleitung aufweist, die den Betriebsflüssigkeitsbehälterinnenraum zumindest mittelbar mit der Atmosphäre fluidverbindet. Das Verfahren weist dabei die folgenden Verfahrensschritte auf:
- Ermitteln eines Drucks innerhalb des Betriebsflüssigkeitsbehälterinnenraums und/oder innerhalb des Einfüllrohrs während eines Befüllvorgangs;
- Ermitteln eines Soll-Öffnungsgrades des elektrisch steuerbaren Ventils in Abhängigkeit des Drucks; und
- Einstellen des Öffnungsgrades des elektrisch steuerbaren Ventils auf den Soll-Öffnungsgrad.

Das entsprechend ausgebildete erfindungsgemäße Verfahren weist den Vorteil auf, dass die während eines Befüllvorgangs aus dem Betriebsflüssigkeitsbehälter ausgetriebene Menge an mit gasförmigen Bestandteilen der Betriebsflüssigkeit beladenen Luft an die Atmosphäre oder in ein Aktivkohlefilter reduziert wird. Denn durch die Steuerung des Öffnungsgrads des elektrisch steuerbaren Ventils kann der aus dem Betriebsflüssigkeitsbehälter ausgetriebene Gasvolumenstrom, der aus dem Betriebsflüssigkeitsbehälterinnenraum über die Rezirkulationsleitung und über das Einfüllrohr wieder in den Betriebsflüssigkeitsbehälterinnenraum zurückgeführt wird, in Abhängigkeit des Drucks innerhalb des Betriebsflüssigkeitsbehälterinnenraums und/oder mittels des Drucks innerhalb des Einfüllrohrs so gesteuert werden, dass eine minimierte Menge an frischer Umgebungsluft über das Einfüllrohr in den Betriebsflüssigkeitsbehälter eingesaugt wird, und dass eine minimierte Menge von aus dem Betriebsflüssigkeitsbehälter ausgetriebenen Gas über die Entlüftungsleitung an die Atmosphäre oder an ein Aktivkohlefilter, das mittels der Entlüftungsleitung mit dem Betriebsflüssigkeitsbehälterinnenraum fluidverbunden ist, abgegeben wird, und dass eine über das Einfüllrohr an die Atmosphäre ausgetriebene Gasmenge minimiert wird.

Der Betriebsflüssigkeitsbehälter ist beispielsweise ein in einem Kraftfahrzeug einzubauender Betriebsflüssigkeitsbehälter. Der Betriebsflüssigkeitsbehälter kann beispielsweise als Kraftfahrzeugtank ausgebildet sein. Ferner kann der Betriebsflüssigkeitsbehälter auch als SCR-Behälter oder auch als Öl-Behälter ausgebildet sein. Erfindungsgemäß bestehen diesbezüglich keine Einschränkungen.

Der Betriebsflüssigkeitsbehälter weist vorzugsweise eine Aktivkohlefiltereinrichtung auf, die mittels der Entlüftungsleitung mit dem Betriebsflüssigkeitsbehälterinnenraum fluidverbunden ist, so dass der Betriebsflüssigkeitsbehälterinnenraum mittels der Aktivkohlefiltereinrichtung mit der Atmosphäre fluidverbunden ist.

Das elektrisch steuerbare Ventil ist beispielsweise als Proportionalventil ausgebildet. Das elektrisch steuerbare Ventil ist beispielsweise kontinuierlich zwischen einer Offenstellung und einer Schließstellung verstellbar.

Das elektrisch steuerbare Ventil kann auch als erstes Ventil oder als Rezirkulationsventil bezeichnet werden.

Das Verfahren wird beispielsweise unter Verwendung einer elektronischen Steuerungseinrichtung ausgeführt, die mit dem elektrisch steuerbaren Ventil über eine Datenaustauschverbindung datengekoppelt ist. Die elektronische Steuerungseinrichtung ist dazu ausgebildet, basierend auf einen Druck innerhalb des Betriebsflüssigkeitsbehälterinnenraums ein Soll-Öffnungsgrad zu ermitteln und an das elektrisch steuerbare Ventil ein derartiges Steuerungssignal auszugeben, sodass der Öffnungsgrad des elektrisch steuerbaren Ventils auf den Soll-Öffnungsgrad eingestellt wird.

Beispielsweise wird für einen Betriebsflüssigkeitsbehälter bzw. für einen Betriebsflüssigkeitsbehältertyp eine Sollwerttabelle für den Soll-Öffnungsgrad des elektrisch steuerbaren Ventils in Abhängigkeit des Drucks, der in einem Bereich zwischen einem minimalen Druck (beispielsweise 900 mbar) und einem maximalen Druck (beispielsweise 1100 mbar) liegt, mittels des folgenden Verfahrens erstellt:
- W1: Einstellen des Drucks auf den minimalen Druck;
- W2: Befüllen des Betriebsflüssigkeitsbehälters über das Einfüllrohr mit dem eingestellten Druck;
- W3: Einstellen des Öffnungsgrads des elektrisch steuerbaren Ventils auf einen minimalen Öffnungsgrad;
- W4: Messen eines durch die Entlüftungsleitung und/oder durch das Einfüllrohr ausgetriebenen Gasvolumenstroms und Speichern dieses dem eingestellten Öffnungsgrad zugeordneten Gasvolumenstrom;
- W5: Vergrößern des Öffnungsgrads des elektrisch einstellbaren Ventils um einen vorgegebenen Vergrößerungswert;
- W6: Wiederholen der Verfahrensschritte W4 und W5 bis der Öffnungsgrad des elektrisch einstellbaren Ventils einen maximalen Öffnungsgrad erreicht hat;
- W7: Ermitteln des kleinsten durch die Entlüftungsleitung und/o- der durch das Einfüllrohr ausgetriebenen Gasvolumenstroms unter den den unterschiedlichen Öffnungsgraden und dem eingestellten Druck zugeordneten Gasvolumenströmen;
- W8: Speichern des Öffnungsgrads, der dem eingestellten Druck und dem diesem Druck zugeordneten kleinsten Gasvolumenstrom zugeordnet ist, als Soll-Öffnungsgrad, der dem eingestellten Druck zugeordnet ist;
- W9: Vergrößern des Drucks um einen vorgegebenen Vergrößerungswert; und
- W10: Wiederholen der Verfahrensschritte W2 bis W9 bis der Druck den maximalen Druck erreicht hat.

Der minimale Öffnungsgrad des elektrisch steuerbaren Ventils kann beispielsweise der Schließstellung des elektrisch steuerbaren Ventils entsprechen.

Der maximale Öffnungsgrad des elektrisch steuerbaren Ventils kann beispielsweise der Offenstellung des elektrisch steuerbaren Ventils entsprechen.

Aus dem nach diesem Verfahren erzeugten mehrdimensionalen Kennfeld, welches den ausgetriebenen Gasvolumenstrom in Abhängigkeit von zumindest zwei Eingangsgrößen, dem Druck und dem Öffnungsgrad des elektrisch steuerbaren Ventils für eine bestimmte Geometrie eines Betriebsflüssigkeitsbehälters beschreibt, können die Werte für den Öffnungsgrad des elektrisch steuerbaren Ventils ermittelt werden, bei denen der durch die Entlüftungsleitung ausgetriebene Gasvolumenstrom minimiert ist.

Vorzugsweise ist das Verfahren derart ausgebildet, dass bei Detektierung eines Befüllstops ein Verfahrensschritt zum Schließen des elektrisch steuerbaren Ventils ausgeführt wird.

Vorzugsweise ist das Verfahren für einen Drucksensor aufweisenden Betriebsflüssigkeitsbehälter derart ausgebildet, dass das Ermitteln eines Drucks unter Verwendung von dem Druck im Betriebsflüssigkeitsbehälterinnenraum des Betriebsflüssigkeitsbehälters repräsentierenden Daten, die durch einen Drucksensor im Betriebsflüssigkeitsbehälterinnenraum bereitgestellt werden, und/oder unter Verwendung von den Druck im Einfüllrohr repräsentierenden Daten, die durch den Drucksensor im Einfüllrohr bereitgestellt werden, erfolgt.

Vorzugsweise erfolgt das Ermitteln eines Drucks während eines Befüllvorgangs durch einen Drucksensor.

Der Drucksensor ist vorzugsweise im Betriebsflüssigkeitsbehälterinnenraum angeordnet. Der Drucksensor ist weiter vorzugsweise an der Oberseite des Betriebsflüssigkeitsbehälters im Betriebsflüssigkeitsbehälterinnenraum angebracht.

Vorzugsweise ist das Verfahren für einen ein in der Entlüftungsleitung angeordnetes zweites Ventil aufweisenden Betriebsflüssigkeitsbehälter derart ausgebildet, dass ein Soll-Öffnungsgrad des zweiten Ventils in Abhängigkeit des Drucks ermittelt wird, und dass der Öffnungsgrad des zweiten Ventils auf den Soll-Öffnungsgrad eingestellt wird.

Das zweite Ventil ist beispielsweise als elektrisch steuerbares Ventil, und weiter beispielsweise als Proportionalventil ausgebildet und vorzugsweise zwischen einer Offenstellung und einer Schließstellung verstellbar. Dabei ist das zweite Ventil zwischen der Offenstellung und der Schließstellung beispielsweise kontinuierlich verstellbar.

Das zweite Ventil kann auch als Entlüftungsventil bezeichnet werden.

Vorzugsweise ist das Verfahren derart ausgebildet, dass bei Detektierung eines Befüllvorgangs das zweite Ventil auf einen vorbestimmten und beispielsweise konstanten Öffnungsgrad eingestellt wird.

Vorzugsweise ist das Verfahren derart ausgebildet, dass bei Detektierung eines Befüllstops das zweiten Ventil geschlossen wird.

Bei dem Verfahren erfolgt das Ermitteln eines Soll-Öffnungsgrades des zweiten Ventils beispielsweise in Abhängigkeit des Drucks im Betriebsflüssigkeitsbehälterinnenraum durch Abrufen von in Datentabellen hinterlegten Werten für den Soll-Öffnungsgrad des Ventils.

Bei dem Verfahren erfolgt das Einstellen des Öffnungsgrades des zweiten Ventils auf den Soll-Öffnungsgrad beispielsweise unter Verwendung einer Datenaustauschverbindung zwischen einer Steuerungseinrichtung und dem zweiten Ventil, wobei von der Steuerungseinrichtung Steuersignale an das zweite Ventil gesendet werden.

Wiederum vorzugsweise ist das zweite Ventil als nicht steuerbares Ventil, abermals vorzugsweise als Rückschlagventil, Tankentlüftungsventil, Roll-over Ventil (ROV), Fill-Limit-Vent Ventil (FLVV) oder als Nippel ausgebildet.

Die der vorliegenden Erfindung zugrundeliegende Aufgabe wird ferner durch ein Verfahren zum Befüllen eines Betriebsflüssigkeitsbehälters gelöst, wobei der Betriebsflüssigkeitsbehälter zumindest einen Betriebsflüssigkeitsbehälterinnenraum aufweist, der über ein Einfüllrohr mit einer Betriebsflüssigkeit befüllbar ist, und wobei der Betriebsflüssigkeitsbehälterinnenraum mittels einer Rezirkulationsleitung mit dem Einfüllrohr fluidverbunden ist, und wobei der Betriebsflüssigkeitsbehälter ein elektrisch steuerbares Ventil aufweist, das in der Rezirkulationsleitung angeordnet ist und zwischen einer Offenstellung und einer Schließstellung verstellbar ist, und wobei der Betriebsflüssigkeitsbehälter eine Entlüftungsleitung aufweist, die den Betriebsflüssigkeitsbehälterinnenraum zumindest mittelbar mit der Atmosphäre fluidverbindet. Das Verfahren weist dabei die folgenden Verfahrensschritte auf:
- Ermitteln eines aus dem Einfüllrohr ausgetriebenen Gasvolumenstroms während eines Befüllvorgangs;
- Ermitteln eines Soll-Öffnungsgrades des elektrisch steuerbaren Ventils in Abhängigkeit des Gasvolumenstroms; und
- Einstellen des Öffnungsgrades des elektrisch steuerbaren Ventils auf den Soll-Öffnungsgrad.

Das entsprechend ausgebildete erfindungsgemäße Verfahren weist den Vorteil auf, dass die während eines Befüllvorgangs aus dem Betriebsflüssigkeitsbehälter ausgetriebene Menge an mit gasförmigen Bestandteilen der Betriebsflüssigkeit beladenen Luft an die Atmosphäre oder in ein Aktivkohlefilter reduziert wird. Denn durch die Steuerung des Öffnungsgrads des elektrisch steuerbaren Ventils kann der aus dem Betriebsflüssigkeitsbehälter ausgetriebene Gasvolumenstrom, der aus dem Betriebsflüssigkeitsbehälterinnenraum über die Rezirkulationsleitung und über das Einfüllrohr wieder in den Betriebsflüssigkeitsbehälterinnenraum zurückgeführt wird, in Abhängigkeit der Gasvolumenstroms, der aus dem Einfüllrohr ausgetrieben wird, so gesteuert werden, dass eine minimierte Menge an frischer Umgebungsluft über das Einfüllrohr in den Betriebsflüssigkeitsbehälter eingesaugt wird, und dass eine minimierte Menge von aus dem Betriebsflüssigkeitsbehälter ausgetriebenen Gas über die Entlüftungsleitung an die Atmosphäre oder an ein Aktivkohlefilter, das mittels der Entlüftungsleitung mit dem Betriebsflüssigkeitsbehälterinnenraum fluidverbunden ist, abgegeben wird, und dass eine über das Einfüllrohr an die Atmosphäre ausgetriebene Gasmenge minimiert wird.

Der Betriebsflüssigkeitsbehälter ist beispielsweise ein in einem Kraftfahrzeug einzubauender Betriebsflüssigkeitsbehälter. Der Betriebsflüssigkeitsbehälter kann beispielsweise als Kraftfahrzeugtank ausgebildet sein. Ferner kann der Betriebsflüssigkeitsbehälter auch als SCR-Behälter oder auch als Öl-Behälter ausgebildet sein. Erfindungsgemäß bestehen diesbezüglich keine Einschränkungen.

Der Betriebsflüssigkeitsbehälter weist vorzugsweise eine Aktivkohlefiltereinrichtung auf, die mittels der Entlüftungsleitung mit dem Betriebsflüssigkeitsbehälterinnenraum fluidverbunden ist, so dass der Betriebsflüssigkeitsbehälterinnenraum mittels der Aktivkohlefiltereinrichtung mit der Atmosphäre fluidverbunden ist.

Das elektrisch steuerbare Ventil ist beispielsweise als Proportionalventil ausgebildet. Das elektrisch steuerbare Ventil ist beispielsweise kontinuierlich zwischen einer Offenstellung und einer Schließstellung verstellbar.

Das elektrisch steuerbare Ventil kann auch als erstes Ventil oder als Rezirkulationsventil bezeichnet werden.

Das Verfahren wird beispielsweise unter Verwendung einer elektronischen Steuerungseinrichtung ausgeführt, die mit dem elektrisch steuerbaren Ventil über eine Datenaustauschverbindung datengekoppelt ist. Die elektronische Steuerungseinrichtung ist dazu ausgebildet, basierend auf einen Gasvolumenstrom innerhalb des Einfüllrohrs ein Soll-Öffnungsgrad zu ermitteln und an das elektrisch steuerbare Ventil ein derartiges Steuerungssignal auszugeben, sodass der Öffnungsgrad des elektrisch steuerbaren Ventils auf den Soll-Öffnungsgrad eingestellt wird.

Vorzugsweise ist das Verfahren für einen eine Gasflussmesseinrichtung aufweisenden Betriebsflüssigkeitsbehälter derart ausgebildet, dass das Ermitteln eines Gasvolumenstroms unter Verwendung von den Gasvolumenstrom im Einfüllrohr repräsentierenden Daten, die durch die Gasflussmesseinrichtung bereitgestellt werden, erfolgt.

Vorzugsweise erfolgt das Ermitteln eines Gasvolumenstroms während eines Befüllvorgangs durch einen Drucksensor. Vorzugsweise ist das Verfahren für einen ein in der Entlüftungsleitung angeordnetes zweites Ventil aufweisenden Betriebsflüssigkeitsbehälter derart ausgebildet, dass ein Soll-Öffnungsgrad des zweiten Ventils in Abhängigkeit des Gasvolumenstroms ermittelt wird, und dass der Öffnungsgrad des zweiten Ventils auf den Soll-Öffnungsgrad eingestellt wird.

Das zweite Ventil ist beispielsweise als elektrisch steuerbares Ventil, und weiter beispielsweise als Proportionalventil ausgebildet und vorzugsweise zwischen einer Offenstellung und einer Schließstellung verstellbar. Dabei ist das zweite Ventil zwischen der Offenstellung und der Schließstellung beispielsweise kontinuierlich verstellbar.

Das zweite Ventil kann auch als Entlüftungsventil bezeichnet werden.

Vorzugsweise ist das Verfahren derart ausgebildet, dass bei Detektierung eines Befüllvorgangs das zweite Ventil auf einen vorbestimmten und beispielsweise konstanten Öffnungsgrad eingestellt wird.

Vorzugsweise ist das Verfahren derart ausgebildet, dass bei Detektierung eines Befüllstops das zweiten Ventil geschlossen wird.

Bei dem Verfahren erfolgt das Ermitteln eines Soll-Öffnungsgrades des zweiten Ventils beispielsweise in Abhängigkeit des Gasvolumenstroms im Einfüllrohr durch Abrufen von in Datentabellen hinterlegten Werten für den Soll-Öffnungsgrad des Ventils.

Bei dem Verfahren erfolgt das Einstellen des Öffnungsgrades des zweiten Ventils auf den Soll-Öffnungsgrad beispielsweise unter Verwendung einer Datenaustauschverbindung zwischen einer Steuerungseinrichtung und dem zweiten Ventil, wobei von der Steuerungseinrichtung Steuersignale an das zweite Ventil gesendet werden.

Wiederum vorzugsweise ist das zweite Ventil als nicht steuerbares Ventil, abermals vorzugsweise als Rückschlagventil, Tankentlüftungsventil, Roll-over Ventil (ROV), Fill-Limit-Vent Ventil (FLVV) oder als Nippel ausgebildet.

Das Verfahren ist vorzugsweise derart ausgebildet, dass der Soll-Öffnungsgrad des elektrisch steuerbaren Ventils und/oder des zweiten Ventils so ermittelt und eingestellt ist, dass ein aus der Entlüftungsleitung ausgetriebener Gasvolumenstrom minimiert ist.

Vorzugsweise wird der Soll-Öffnungsgrad des zweiten Ventils durch ein Verfahren wie oben beschrieben ermittelt.

Das Verfahren ist vorzugsweise derart ausgebildet, dass der Soll-Öffnungsgrad des elektrisch steuerbaren Ventils und/oder des zweiten Ventils so ermittelt ist, dass ein aus dem Einfüllrohr an die Atmosphäre ausgetriebener Gasvolumenstrom minimiert ist.

Beispielsweise wird für einen Betriebsflüssigkeitsbehälter bzw. für einen Betriebsflüssigkeitsbehältertyp eine Sollwerttabelle für den Soll-Öffnungsgrad des elektrisch steuerbaren Ventils in Abhängigkeit der Befüllrate, die in einem Bereich zwischen einer minimalen Befüllrate (beispielsweise 10 Liter pro Minute) und einer maximalen Befüllrate (beispielsweise 50 Liter pro Minute) liegt, mittels des folgenden Verfahrens erstellt:
- V1: Einstellen der Befüllrate auf die minimale Befüllrate;
- V2: Befüllen des Betriebsflüssigkeitsbehälters über das Einfüllrohr mit der eingestellten Befüllrate;
- V3: Einstellen des Öffnungsgrads des elektrisch steuerbaren Ventils auf einen minimalen Öffnungsgrad;
- V4: Messen eines durch das Einfüllrohr und/oder durch die Entlüftungsleitung ausgetriebenen Gasvolumenstroms und Speichern dieses dem eingestellten Öffnungsgrad zugeordneten Gasvolumenstrom;
- V5: Vergrößern des Öffnungsgrads des elektrisch einstellbaren Ventils um einen vorgegebenen Vergrößerungswert;
- V6: Wiederholen der Verfahrensschritte V4 und V5 bis der Öffnungsgrad des elektrisch einstellbaren Ventils einen maximalen Öffnungsgrad erreicht hat;
- V7: Ermitteln des kleinsten durch das Einfüllrohr und/oder durch die Entlüftungsleitung ausgetriebenen Gasvolumenstroms unter den den unterschiedlichen Öffnungsgraden und der eingestellten Befüllrate zugeordneten Gasvolumenströmen;
- V8: Speichern des Öffnungsgrads, der der eingestellten Befüllrate und dem dieser Befüllrate zugeordneten kleinsten Gasvolumenstrom zugeordnet ist, als Soll-Öffnungsgrad, der der eingestellten Befüllrate zugeordnet ist;
- V9: Vergrößern der Befüllrate um einen vorgegebenen Vergrößerungswert; und
- V10: Wiederholen der Verfahrensschritte V2 bis V9 bis die Befüllrate die maximale Befüllrate erreicht hat.

Die eingestellte Befüllrate wird beispielsweise an einem Zapfventil oder einer anderen Betriebsflüssigkeitsausgabeeinrichtung eingestellt.

Der minimale Öffnungsgrad des elektrisch steuerbaren Ventils kann beispielsweise der Schließstellung des elektrisch steuerbaren Ventils entsprechen.

Der maximale Öffnungsgrad des elektrisch steuerbaren Ventils kann beispielsweise der Offenstellung des elektrisch steuerbaren Ventils entsprechen.

Aus dem nach diesem Verfahren erzeugten mehrdimensionalen Kennfeld, welches den ausgetriebenen Gasvolumenstrom in Abhängigkeit von zumindest zwei Eingangsgrößen, der Befüllrate und dem Öffnungsgrad des elektrisch steuerbaren Ventils für eine bestimmte Geometrie eines Betriebsflüssigkeitsbehälters beschreibt, können die Werte für den Öffnungsgrad des elektrisch steuerbaren Ventils ermittelt werden, bei denen der durch die Entlüftungsleitung ausgetriebene Gasvolumenstrom minimiert ist.

Vorzugsweise wird der Soll-Öffnungsgrad des zweiten Ventils durch ein Verfahren wie oben beschrieben ermittelt.

Vorzugsweise ist das Verfahren derart ausgebildet, dass das Ermitteln eines Soll-Öffnungsgrades des elektrisch steuerbaren Ventils durch Abrufen von in Datentabellen hinterlegten Werten für den Soll-Öffnungsgrad des elektrisch steuerbaren Ventils erfolgt.

Vorzugsweise werden die in den Datentabellen hinterlegten Werte für den Soll-Öffnungsgrad des elektrisch steuerbaren Ventils vor dem Befüllvorgang ermittelt.

Vorzugsweise werden die in den Datentabellen hinterlegten Werte für den Soll-Öffnungsgrad des elektrisch steuerbaren Ventils in Abhängigkeit der Geometrie des Betriebsflüssigkeitsbehälters ermittelt.

Weiter vorzugsweise werden die in den Datentabellen hinterlegten Werte für den Soll-Öffnungsgrad des zweiten Ventils vor dem Befüllvorgang ermittelt.

Weiter vorzugsweise werden die in den Datentabellen hinterlegten Werte für den Soll-Öffnungsgrad des zweiten Ventils in Abhängigkeit der Geometrie des Betriebsflüssigkeitsbehälters ermittelt.

Ferner liegt der vorliegenden Erfindung die Aufgabe zugrunde, einen Betriebsflüssigkeitsbehälter bereitzustellen, der eine Reduktion von aus dem Betriebsflüssigkeitsbehälter ausgetriebenen Gase während eines Befüllvorgangs des Betriebsflüssigkeitsbehälters an die Atmosphäre ermöglicht.

Diese der vorliegenden Erfindung zugrundeliegende Aufgabe wird durch einen Betriebsflüssigkeitsbehälter mit den Merkmalen des Anspruchs 10 gelöst. Vorteilhafte Ausgestaltungen des Betriebsflüssigkeitsbehälters sind in den von Anspruch 10 abhängigen Ansprüchen beschrieben.

Im Genaueren wird diese der vorliegenden Erfindung zugrundeliegende Aufgabe durch einen Betriebsflüssigkeitsbehälter gelöst, wobei der Betriebsflüssigkeitsbehälter einen Betriebsflüssigkeitsbehälterinnenraum aufweist, der über ein Einfüllrohr mit einer Betriebsflüssigkeit befüllbar ist, und wobei der Betriebsflüssigkeitsbehälterinnenraum mittels einer Rezirkulationsleitung mit dem Einfüllrohr fluidverbunden ist, und wobei der Betriebsflüssigkeitsbehälter ein elektrisch steuerbares Ventil aufweist, das in der Rezirkulationsleitung angeordnet ist und zwischen einer Offenstellung und einer Schließstellung verstellbar ist, und wobei der Betriebsflüssigkeitsbehälter eine Entlüftungsleitung aufweist, die den Betriebsflüssigkeitsbehälterinnenraum zumindest mittelbar mit der Atmosphäre fluidverbindet, und wobei der Betriebsflüssigkeitsbehälter einen Füllstandsensor und/oder einen Drucksensor aufweist, der im Betriebsflüssigkeitsbehälterinnenraum angeordnet ist, und/oder einen Drucksensor aufweist, der im Einfüllrohr angeordnet ist. Der Betriebsflüssigkeitsbehälter ist dadurch gekennzeichnet, dass der Betriebsflüssigkeitsbehälter eine elektronische Steuerungseinrichtung und/oder eine Schnittstelle zu einer elektronischen Steuerungseinrichtung aufweist, die dazu ausgebildet ist, eines der oben beschriebenen Verfahren zum Befüllen eines Betriebsflüssigkeitsbehälters auszuführen.

Der erfindungsgemäße Betriebsflüssigkeitsbehälter weist den Vorteil auf, dass die während eines Befüllvorgangs aus dem Betriebsflüssigkeitsbehälter ausgetriebene Menge an mit gasförmigen Bestandteilen der Betriebsflüssigkeit beladenen Luft an die Atmosphäre oder in ein Aktivkohlefilter reduziert wird.

Dadurch kann eine zwischen Entlüftungsleitung und Atmosphäre platzierte Aktivkohlefiltereinrichtung mit weniger Kohlenwasserstoffen aus dem ausgetriebenen Gasvolumen beladen werden, wodurch wiederum die Aktivkohlefiltereinrichtung kleiner dimensioniert werden kann was schließlich Kosten und Gewicht einspart.

Der Betriebsflüssigkeitsbehälter ist beispielsweise ein in einem Kraftfahrzeug einzubauender Betriebsflüssigkeitsbehälter. Der Betriebsflüssigkeitsbehälter kann beispielsweise als Kraftstofftank ausgebildet sein. Ferner kann der Betriebsflüssigkeitsbehälter als SCR-Behälter oder Öl-Behälter ausgebildet sein.

Die Steuerungseinrichtung weist zumindest einen elektrischen Datenspeicher auf. Der elektrische Datenspeicher ist dazu ausgebildet, die Datentabelle zu speichern und auszugeben.

Der Betriebsflüssigkeitsbehälter weist vorzugsweise eine Aktivkohlefiltereinrichtung auf, die mit der Atmosphäre und dem Betriebsflüssigkeitsbehälterinnenraum durch die Entlüftungsleitung fluidverbunden ist.

Der Füllstandsensor ist vorzugsweise im Betriebsflüssigkeitsbehälterinnenraum angeordnet. Der Füllstandsensor ist weiter vorzugsweise an der Unterseite des Betriebsflüssigkeitsbehälters im Betriebsflüssigkeitsbehälterinnenraum angebracht.

Vorzugsweise ist der Betriebsflüssigkeitsbehälter derart ausgebildet, dass dieser ein zweites Ventil aufweist, das in der Entlüftungsleitung angeordnet ist.

Durch eine entsprechende Ausbildung des Betriebsflüssigkeitsbehälters lassen sich die Emissionen aus dem Betriebsflüssigkeitsbehälter an die Atmosphäre und in ein Aktivkohlefilter nochmals reduzieren.

Das zweite Ventil ist vorzugsweise zwischen einer Offenstellung und einer Schließstellung verstellbar.

Das zweite Ventil ist vorzugsweise kontinuierlich zwischen einer Offenstellung und einer Schließstellung verstellbar.

Wiederum vorzugsweise ist das zweite Ventil als nicht steuerbares Ventil, abermals vorzugsweise als Rückschlagventil, Tankentlüftungsventil, Roll-over Ventil (ROV), Fill-Limit-Vent Ventil (FLVV) oder einfacher Nippel ausgebildet.

Vorzugsweise ist der Betriebsflüssigkeitsbehälter derart ausgebildet, dass das zweite Ventil als ein elektrisch steuerbares Ventil ausgebildet ist.

Das zweite Ventil ist vorzugsweise als Proportionalventil ausgebildet und weiter vorzugsweise kontinuierlich zwischen einer Offenstellung und einer Schließstellung verstellbar.

Vorzugsweise ist der Betriebsflüssigkeitsbehälter derart ausgebildet, dass das elektrisch steuerbare Ventil und das zweite Ventil als ein Bauteil ausgebildet sind.

Vorzugsweise ist das Bauteil als ein Wege-Ventil ausgebildet. Weiterhin vorzugsweise ist das Wege-Ventil als 3/2-Wegeventil ausgebildet.

Vorzugsweise ist der Betriebsflüssigkeitsbehälter derart ausgebildet, dass das zweite Ventil als nicht gesteuertes Ventil ausgebildet ist, wobei die Steuerungseinrichtung dazu ausgebildet ist, ein Verfahren nach einem der Ansprüche 1 - 2 oder 4 - 5 oder 7 - 9 auszuführen.

Vorzugsweise ist das zweite Ventil als Rückschlagventil, Tankentlüftungsventil, Roll-over Ventil (ROV), Fill-Limit-Vent Ventil (FLVV) oder als Nippel ausgebildet.

Ferner liegt der vorliegenden Erfindung die Aufgabe zugrunde, ein Kraftfahrzeug bereitzustellen, das einen reduzierten ausgetriebenen Gasvolumenstrom während des Befüllvorgangs aufweist.

Diese der vorliegenden Erfindung zugrundeliegende Aufgabe wird durch ein Kraftfahrzeug mit den Merkmalen des Anspruchs 15 gelöst.

Im Genaueren wird diese der vorliegenden Erfindung zugrundeliegende Aufgabe durch ein Kraftfahrzeug gelöst, das dadurch gekennzeichnet ist, dass das Kraftfahrzeug einen oben beschriebenen Betriebsflüssigkeitsbehälter aufweist.

Das Kraftfahrzeug ist vorzugsweise als Hybrid-Fahrzeug ausgebildet. Als Hybrid-Fahrzeug wird ein Fahrzeug bezeichnet, welches zwei unterschiedliche Energiespeicher besitzt, welche die Energie zur Fortbewegung des Fahrzeugs aufnehmen, speichern und abgeben können. Unterschiedliche Energiespeicher speichern Energie beispielsweise in unterschiedlichen Aggregatzuständen. Vorzugsweise weist das Hybrid-Fahrzeug eine Traktionsbatterie und einen Kraftstofftank auf.

Weitere Vorteile, Einzelheiten und Merkmale der Erfindung ergeben sich nachfolgend aus den erläuterten Ausführungsbeispielen. Dabei zeigen im Einzelnen:
- Figur 1A:: eine schematische Darstellung eines Betriebsflüssigkeitsbehälters gemäß der vorliegenden Erfindung;
- Figur 1B:: eine schematische Darstellung eines Betriebsflüssigkeitsbehälters gemäß einer weiteren Ausführungsform der vorliegenden Erfindung;
- Figur 1C:: eine schematische Darstellung eines Betriebsflüssigkeitsbehälters gemäß einer nochmals weiteren Ausführungsform der vorliegenden Erfindung;
- Figur 1D:: eine schematische Darstellung eines Betriebsflüssigkeitsbehälters gemäß einer nochmals weiteren Ausführungsform der vorliegenden Erfindung;
- Figur 1E:: eine schematische Darstellung eines Betriebsflüssigkeitsbehälters gemäß einer nochmals weiteren Ausführungsform der vorliegenden Erfindung;
- Figur 2:: eine Darstellung eines von einer Befüllrate eines Betriebsflüssigkeitsbehälters abhängigen Öffnungsgrads eines in einer Rezirkulationsleitung des Betriebsflüssigkeitsbehälters angeordnetem Ventil;
- Figur 3:: ein Verfahrensablaufdiagramm eines erfindungsgemäßen Verfahrens zum Befüllen eines Betriebsflüssigkeitsbehälters;
- Figur 4:: ein Verfahrensablaufdiagramm eines Verfahrens gemäß einer weiteren Ausführungsform der vorliegenden Erfindung
- Figur 5:: ein Verfahrensablaufdiagramm zur Bestimmung des Soll-Öffnungsgrades eines in einer Rezirkulationsleitung und/oder einer Entlüftungsleitung des Betriebsflüssigkeitsbehälters angeordneten Ventils, so dass der durch eine Entlüftungsleitung ausgetriebene Gasvolumenstrom für eine jeweilige Befüllrate minimiert ist;
- Figur 6:: ein Verfahrensablaufdiagramm zur Bestimmung des Soll-Öffnungsgrades eines in einer Rezirkulationsleitung und/oder einer Entlüftungsleitung des Betriebsflüssigkeitsbehälters angeordneten Ventils, so dass der durch die Entlüftungsleitung ausgetriebene Gasvolumenstrom für einen jeweiligen Druck im Betriebsflüssigkeitsbehälterinnenraum minimiert ist;
- Figur 7:: ein Verfahrensablaufdiagramm zur Bestimmung des Öffnungsgrades eines zweiten Ventils in Abhängigkeit der Befüllrate, das in der Entlüftungsleitung des Betriebsflüssigkeitsbehälters angeordnet ist; und
- Figur 8:: ein Verfahrensablaufdiagramm zur Bestimmung des Öffnungsgrades eines zweiten Ventils in Abhängigkeit des Drucks, das in der Entlüftungsleitung des Betriebsflüssigkeitsbehälters angeordnet ist.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

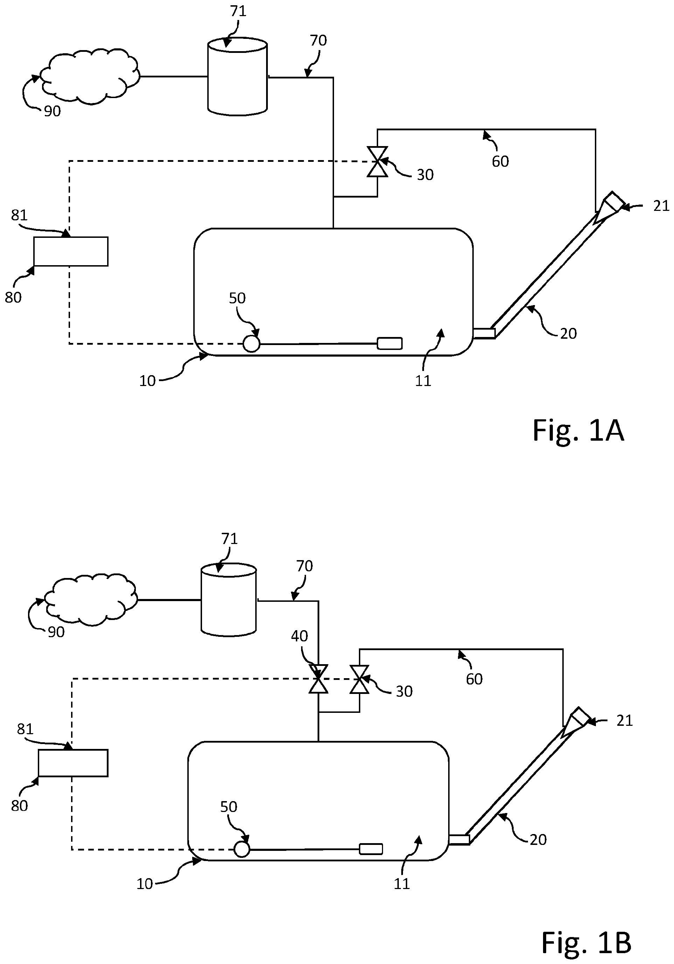

Die Figuren 1A bis 1E zeigen jeweils schematische Darstellungen jeweils einer Ausführungsform eines erfindungsgemäßen Betriebsflüssigkeitsbehälters 10. Aus den Figuren 1A bis 1E ist ersichtlich, dass jeder der in den Figuren 1A bis 1E dargestellten Betriebsflüssigkeitsbehälter 10 einen Betriebsflüssigkeitsbehälterinnenraum 11 aufweist. Ferner weist jeder der in den Figuren 1A bis 1E dargestellten Betriebsflüssigkeitsbehälter 10 ein Einfüllrohr 20 auf, das mit dem Betriebsflüssigkeitsbehälterinnenraum 11 fluidverbunden ist. Jeder der in den Figuren 1A bis 1E dargestellten Betriebsflüssigkeitsbehälter 10 ist mit einer Betriebsflüssigkeit befüllbar, indem eine in den Figuren nicht dargestellte Befülleinrichtung (beispielsweise ein Zapfventil einer Tanksäule) in einen Einfüllstutzen 21 des Einfüllrohrs 20 eingeschoben wird. Weiterhin weist jeder der in den Figuren 1A bis 1E dargestellten Betriebsflüssigkeitsbehälter 10 eine Rezirkulationsleitung 60 auf, die den Betriebsflüssigkeitsbehälterinnenraum 11 mit dem Einfüllrohr 20 fluidverbindet. Ferner weist jeder der in den Figuren 1A bis 1EC dargestellten Betriebsflüssigkeitsbehälter 10 ein elektrisch steuerbares Ventil 30 auf, welches in der Rezirkulationsleitung 60 zwischen dem Betriebsflüssigkeitsbehälterinnenraum 11 und dem Einfüllrohr 20 angeordnet ist. Weiterhin weist jeder der in den Figuren 1A bis 1E dargestellten Betriebsflüssigkeitsbehälter 10 eine Entlüftungsleitung 70 auf, die den Betriebsflüssigkeitsbehälter 10 mit der Atmosphäre 90 mittelbar fluidverbindet.

Aus den Figuren 1A bis 1E ist ferner ersichtlich, dass jeder der Betriebsflüssigkeitsbehälter 10 jeweils eine Aktivkohlefiltereinrichtung 71 aufweist, über die der Betriebsflüssigkeitsbehälterinnenraum 11 über die in Entlüftungsleitung 70 mittelbar mit der Atmosphäre 90 fluidverbinden ist. Die Aktivkohlefiltereinrichtung 70 ist eine nicht notwendige Einrichtung, so dass der Betriebsflüssigkeitsbehälterinnenraum 11 über die Entlüftungsleitung 70 auch direkt mit der Atmosphäre 90 fluidverbunden sein könnte.

Die in den Figuren 1A und 1B dargestellten Betriebsflüssigkeitsbehälter 10 weisen jeweils einen Füllstandsensor 50 auf, der im Betriebsflüssigkeitsbehälterinnenraum 11 angeordnet ist. In den dargestellten Ausführungsbeispielen ist der Füllstandsensor 50 als Hebelgeber 50 ausgebildet. Jedoch ist die vorliegende Erfindung auf eine entsprechende Ausgestaltung des Füllstandsensors 50 nicht eingeschränkt. Der Füllstandsensor kann auf beliebige Art und Weise ausgebildet sein, beispielsweise als Ultraschallsensor oder als optischer Sensor, usw.

Der in Figur 1A dargestellte Betriebsflüssigkeitsbehälter 10 weist eine Steuerungseinrichtung 80 auf, die mit dem Füllstandsensor 50 und dem elektrisch steuerbaren Ventil 30 über Schnittstellen 81 verbunden ist.

Bei einer Befüllung der in den Figuren Figur 1A bis 1E dargestellten Betriebsflüssigkeitsbehälter 10 mit einer Betriebsflüssigkeit wird ein Gasvolumenstrom aus dem Betriebsflüssigkeitsbehälterinnenraum 11 über die Rezirkulationsleitung 60 und ein weiterer Gasvolumenstrom über die Entlüftungsleitung 70 ausgetrieben.

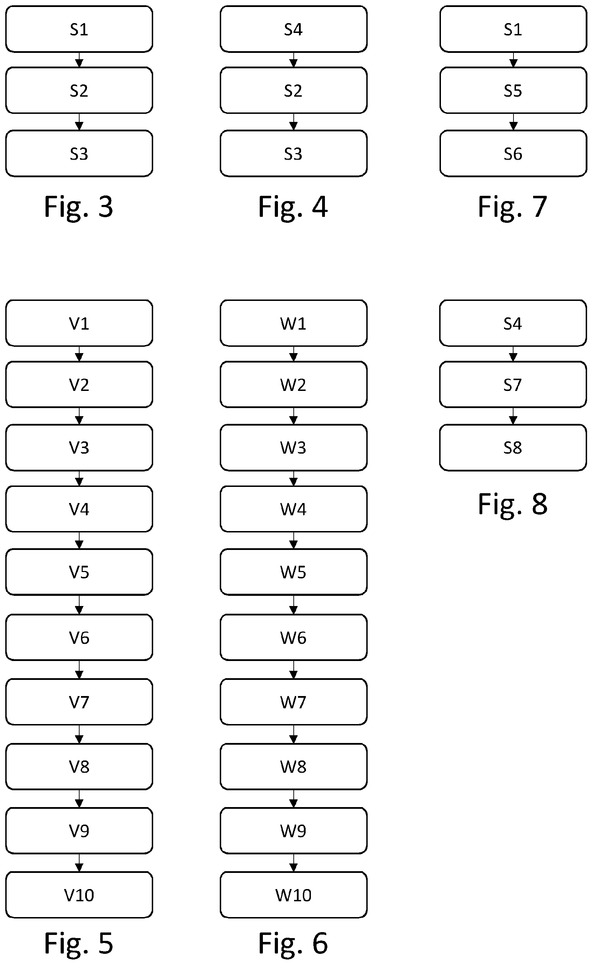

Bei den in den Figuren 1A und 1B dargestellten Betriebsflüssigkeitsbehältern 10 wird der über die Rezirkulationsleitung 60 ausgetriebene Gasvolumenstrom und der über die Entlüftungsleitung 70 ausgetriebene Gasvolumenstrom über ein in Figur 3 im Verfahrensablaufdiagramm dargestellte Verfahren beeinflusst. Zunächst wird in einem Schritt S1 eine Befüllrate auf Basis von den Füllstand des Betriebsflüssigkeitsbehälters 10 repräsentierenden Daten, welche durch den Füllstandsensor 50 ermittelt werden, bestimmt. In einem Schritt S2 wird in Abhängigkeit der so ermittelten Befüllrate ein Soll-Öffnungsgrad des elektrisch steuerbaren Ventils 30 bestimmt. Danach wird in einem Schritt S3 der Öffnungsgrad des elektrisch steuerbaren Ventils 30 auf den ermittelten Soll-Öffnungsgrad eingestellt.

Dieses Verfahren wird beispielsweise unter Verwendung einer elektronischen Steuerungseinrichtung 80 ausgeführt, die mit dem elektrisch steuerbaren Ventil 30 über eine Datenaustauschverbindung datengekoppelt ist. Die elektronische Steuerungseinrichtung 80 ist dazu ausgebildet, basierend auf einer Befüllrate, mit der der Betriebsflüssigkeitsbehälter 10 mit einer Betriebsflüssigkeit befüllt wird, einen Soll-Öffnungsgrad zu ermitteln und an das elektrisch steuerbare Ventil 30 ein entsprechendes Steuerungssignal auszugeben, so dass das der Öffnungsgrad des elektrisch steuerbaren Ventils 30 auf den Soll-Öffnungsgrad eingestellt wird.

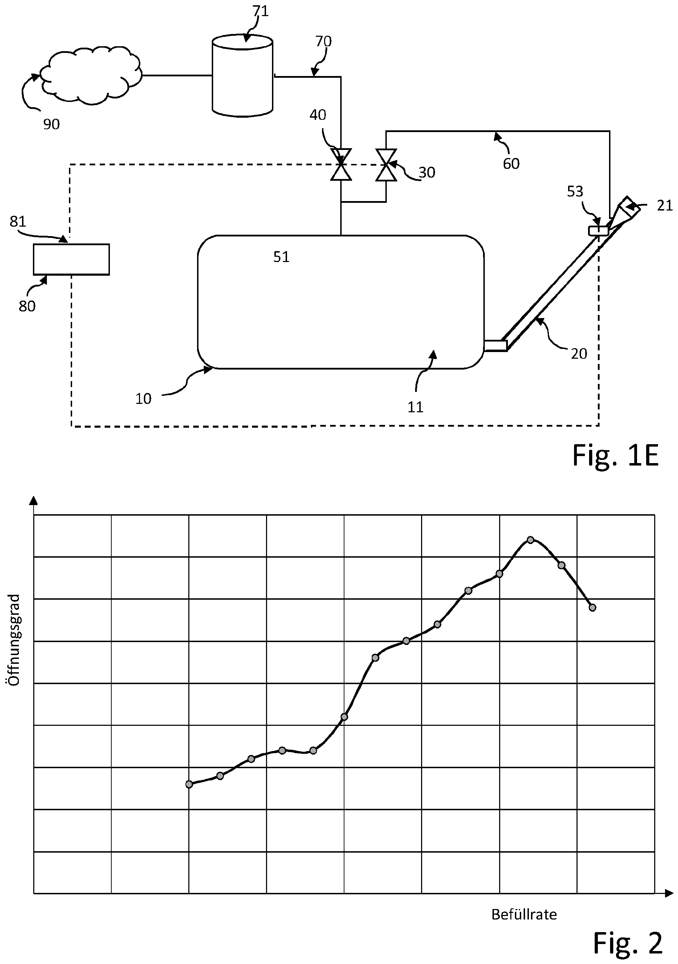

Die Ermittlung des Soll-Öffnungsgrads in Abhängigkeit der Befüllrate in Schritt S2 wird anhand eines wie es in Figur 2 schematisch dargestellten Kennfeldes ermittelt. Dazu ist das in Figur 2 dargestellte Kennfeld in Form von Sollwerttabellen auf der elektronischen Steuereinheit 80 hinterlegt. Der Soll-Öffnungsgrad ist dabei so ermittelt, dass der durch die Entlüftungsleitung ausgetriebene Gasvolumenstrom minimiert ist.

Im Genaueren zeigt das in Figur 5 dargestellte Verfahrensablaufdiagramm ein Verfahren für die Ermittlung einer Sollwerttabelle bzw. eines Kennfeldes für den Soll-Öffnungsgrad eines elektrisch steuerbaren Ventils 30 in Abhängigkeit der Befüllrate. Die Befüllrate kann beispielsweise in einem Bereich zwischen einer minimalen Befüllrate (beispielsweise 10 Liter pro Minute) und einer maximalen Befüllrate (beispielsweise 50 Liter pro Minute) liegen.

In einem Schritt V1 wird die Befüllrate auf die minimale Befüllrate eingestellt. In einem Schritt V2 wird der Betriebsflüssigkeitsbehälter 10 über das Einfüllrohr 20 mit der eingestellten Befüllrate mit Betriebsflüssigkeit befüllt. In einem Schritt V3 wird der Öffnungsgrad des elektrisch steuerbaren Ventils 30 auf den minimalen Öffnungsgrad eingestellt. Anschließend wird in einem Schritt V4 der durch das Einfüllrohr 20 und/oder durch die Entlüftungsleitung 70 ausgetriebene Gasvolumenstrom gemessen und so gespeichert, dass der Wert des ausgetriebenen Gasvolumenstroms dem Öffnungsgrad und der Befüllrate zugeordnet ist. In einem Verfahrensschritt V5 wird der Öffnungsgrad des elektrisch steuerbaren Ventils 30 um einen vorgegebenen Vergrößerungswert vergrößert. In einem Schritt V6 werden die Verfahrensschritte V4 und V5 so oft wiederholt, bis der Öffnungsgrad des elektrisch steuerbaren Ventils 30 einen maximalen Öffnungsgrad erreicht hat. In einem Schritt V7 wird der kleinste durch das Einfüllrohr 21 und/oder durch die Entlüftungsleitung 70 ausgetriebene Gasvolumenstrom unter den den unterschiedlichen Öffnungsgraden und der eingestellten Befüllrate zugeordneten Gasvolumenströmen ermittelt. In einem Schritt V8 wird der Öffnungsgrad, welcher der eingestellten Befüllrate und dem dieser Befüllrate zugeordnete kleinste Gasvolumenstrom zugeordnet ist, als Soll-Öffnungsgrad, welcher der eingestellten Befüllrate zugeordnet ist, gespeichert. In einem Schritt V9 wird die Befüllrate um einen vorgegebenen Vergrößerungswert vergrößert. In einem letzten Verfahrensschritt V10 werden die Verfahrensschritte V2 bis V9 solange wiederholt, bis die maximale Befüllrate erreicht ist.

Die so ermittelten Soll-Öffnungsgrade weisen jeweils einen für eine gegebene Befüllrate minimalen, durch das Einfüllrohr 20 und/oder durch die Entlüftungsleitung 70 ausgetriebenen Gasvolumenstrom auf.

Der in Figur 1B dargestellte Betriebsflüssigkeitsbehälter 10 weist den gleichen Aufbau wie der in Figur 1A dargestellte Betriebsflüssigkeitsbehälter 10 auf, so dass auf die entsprechende obige Beschreibung verwiesen wird. Der in Figur 1B dargestellte Betriebsflüssigkeitsbehälter 10 weist zusätzlich noch ein zweites Ventil 40 auf, das in Entlüftungsleitung 70 zwischen dem Betriebsflüssigkeitsbehälterinnenraum 70 und der Atmosphäre 90 angeordnet ist. Die Steuerungseinrichtung 80 ist mit dem zweiten Ventil 40 über eine Datenaustauschverbindung verbunden.

Das zweite Ventil 40 kann als passives Ventil beispielsweise in Form eines Nippels oder eines Roll-Over-Ventils oder dergleichen ausgebildet sein. Bei dem in Figur 1B dargestellten Ausführungsbeispiel ist das zweite Ventil 40 als ein elektrisch steuerbares Ventil ausgebildet. Der Öffnungsgrad des zweiten Ventils 40 wird dann vorzugsweise über das in Figur 7 im Ablaufdiagramm dargestellte Verfahren bestimmt. Zunächst wird in Schritt S1 eine Befüllrate auf Basis von den Füllstand des Betriebsflüssigkeitsbehälters repräsentierenden Daten, welche durch den Füllstandsensor 50 ermittelt werden, bestimmt. In Schritt S5 wird in Abhängigkeit der so ermittelten Befüllrate ein Soll-Öffnungsgrad des zweiten Ventils 40 bestimmt. Danach wird in Schritt S6 der Öffnungsgrad des zweiten Ventils 40 auf den ermittelten Soll-Öffnungsgrad eingestellt. Optional werden vor dem Schritt S5 noch die Verfahrensschritte S2 und S3 ausgeführt, die oben mit Bezug auf Figur 3 beschrieben sind.

Das Verfahren wie in Figur 7 dargestellt wird beispielsweise unter Verwendung der elektronischen Steuerungseinrichtung 80 ausgeführt, die mit dem zweiten Ventil 40 über eine Datenaustauschverbindung datengekoppelt ist. Die elektronische Steuerungseinrichtung 80 ist dazu ausgebildet, basierend auf einer Befüllrate, mit der der Betriebsflüssigkeitsbehälter 10 mit einer Betriebsflüssigkeit befüllt wird, einen Soll-Öffnungsgrad zu ermitteln und an das zweite Ventil 40 ein derartiges Steuerungssignal auszugeben, so dass der Öffnungsgrad des zweiten Ventils 40 auf den Soll-Öffnungsgrad eingestellt wird. Der Soll-Öffnungsgrad ist dabei so ermittelt, dass der durch die Entlüftungsleitung 70 und/oder durch das Einfüllrohr 20 ausgetriebene Gasvolumenstrom minimiert ist.

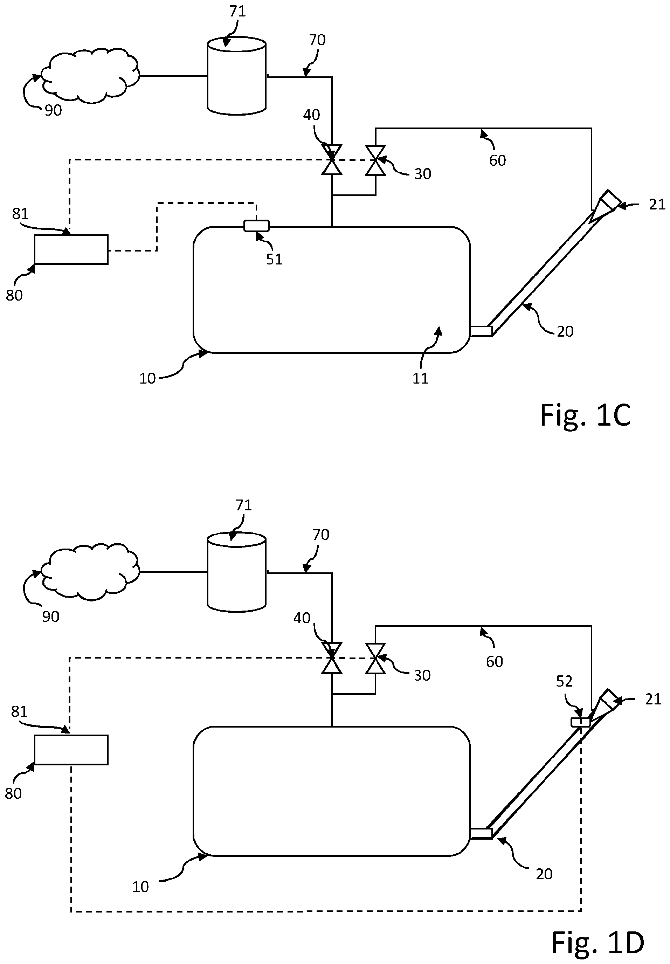

Die in den Figur 1C und 1D dargestellten Betriebsflüssigkeitsbehälter 10 weisen jeweils den gleichen Aufbau wie der in Figur 1B dargestellte Betriebsflüssigkeitsbehälter 10 auf, so dass auf die obige Beschreibung von Figur 1B verwiesen wird. Als Unterschied zu dem in Figur 1B dargestellten Betriebsflüssigkeitsbehälter 10 weisen die in den Figuren 1C und 1D dargestellten Betriebsflüssigkeitsbehälter 10 anstelle des Füllstandsensors 50 im Falle des in Figur 1C dargestellten Betriebsflüssigkeitsbehälter 10 einen Drucksensor 51 auf, der im Betriebsflüssigkeitsbehälterinnenraum 11 angeordnet ist, und im Falle des in Figur 1D dargestellten Betriebsflüssigkeitsbehälter 10 einen Drucksensor 52 auf, der im Einfüllrohr 20 angeordnet ist.

Obwohl in den Figuren 1C und 1D nicht dargestellt, kann der Betriebsflüssigkeitsbehälter zusätzlich zu dem im Einfüllrohr 20 angeordneten Drucksensor 52 auch einen Drucksensor 51 im Betriebsflüssigkeitsbehälterinnenraum 11 aufweisen.

Die Steuerungseinrichtung 80 ist mit dem Drucksensor 51 und/oder dem Drucksensor 52, dem elektrisch steuerbaren Ventil 30 und dem zweiten Ventil 40 über eine Datenaustauschverbindung verbunden.

Werden die in den Figuren 1C und 1D dargestellten Betriebsflüssigkeitsbehälter 10 mit einer Betriebsflüssigkeit befüllt, indem eine in den Figuren nicht dargestellte Befülleinrichtung (beispielsweise ein Zapfventil einer Tanksäule) in einen Einfüllstutzen 21 des Einfüllrohrs 20 eingeschoben wird, wird ein Gasvolumenstrom aus dem Betriebsflüssigkeitsbehälterinnenraum 11 über die Rezirkulationsleitung 60 und ein weiterer Gasvolumenstrom über die Entlüftungsleitung 70 ausgetrieben.

Der über die Rezirkulationsleitung 60 ausgetriebene Gasvolumenstrom und der über die Entlüftungsleitung 70 ausgetriebene Gasvolumenstrom werden über das in Figur 4 im Ablaufdiagramm dargestellte Verfahren beeinflusst. Zunächst wird in Schritt S4 ein Druck innerhalb des Betriebsflüssigkeitsbehälterinnenraums 11 und/oder innerhalb des Einfüllrohrs 20 auf Basis von den Druck innerhalb des Betriebsflüssigkeitsbehältersinnenraums 11 und/oder innerhalb des Einfüllrohrs 20repräsentierenden Daten, welche durch den Drucksensor 51 und/oder den Drucksensor 52 ermittelt werden, bestimmt. In Schritt S2 wird in Abhängigkeit des so ermittelten Drucks ein Soll-Öffnungsgrad des elektrisch steuerbaren Ventils 30 bestimmt. Danach wird in Schritt S3 der Öffnungsgrad des elektrisch steuerbaren Ventils 30 auf den ermittelten Soll-Öffnungsgrad eingestellt.

Das wie in Figur 4 dargestellte Verfahren wird unter Verwendung der elektronischen Steuerungseinrichtung 80 ausgeführt, die mit dem elektrisch steuerbaren Ventil 30 über eine Datenaustauschverbindung datengekoppelt ist. Die elektronische Steuerungseinrichtung 80 ist dazu ausgebildet, basierend auf einem Druck innerhalb des Betriebsflüssigkeitsbehälterinnenraums 11 und/oder basierend auf einem Drucks innerhalb des Einfüllrohrs 20 während der Betriebsflüssigkeitsbehälter 10 befüllt wird, einen Soll-Öffnungsgrad zu ermitteln und an das elektrisch steuerbare Ventil 30 ein derartiges Steuerungssignal auszugeben, so dass der Öffnungsgrad des elektrisch steuerbaren Ventils 30 auf den Soll-Öffnungsgrad eingestellt wird.

Die Ermittlung des Soll-Öffnungsgrads in Abhängigkeit des Drucks in Schritt S2 wird anhand eines Kennfeldes durchgeführt, wobei das Kennfeld in Form von Sollwerttabellen auf der elektronischen Steuereinheit 80 hinterlegt ist. Der Soll-Öffnungsgrad ist dabei so ermittelt, dass der durch die Entlüftungsleitung 70 und/oder durch das Einfüllrohr 20 ausgetriebene Gasvolumenstrom minimiert ist.

Figur 6 zeigt ein Verfahrensablaufdiagramm zur Ermittlung einer Sollwerttabelle für den Soll-Öffnungsgrad des elektrisch steuerbaren Ventils 30 in Abhängigkeit des Drucks im Betriebsflüssigkeitsbehälterinnenraum 11 und/oder in Abhängigkeit des Drucks innerhalb des Einfüllrohrs 20, der/die in einem Bereich zwischen einem minimalen Druck (beispielsweise 900 mbar) und einem maximalen Druck (beispielsweise 1100 mbar) liegt/liegen.

In einem Schritt W1 wird der Druck auf den minimalen Druck eingestellt. In einem Schritt W2 wird der Betriebsflüssigkeitsbehälter 10 über das Einfüllrohr 20 mit dem eingestellten Druck mit Betriebsflüssigkeit befüllt. In einem Schritt W3 wird der Öffnungsgrad des elektrisch steuerbaren Ventils 30 auf den minimalen Öffnungsgrad eingestellt. Anschließend wird in einem Schritt W4 der durch die Entlüftungsleitung 70 und/oder durch das Einfüllrohr 20 ausgetriebene Gasvolumenstrom gemessen und so gespeichert, dass der Wert des ausgetriebenen Gasvolumenstroms dem Öffnungsgrad und dem Druck zugeordnet ist. In einem Verfahrensschritt W5 wird der Öffnungsgrad des elektrisch steuerbaren Ventils 30 um einen vorgegebenen Vergrößerungswert vergrößert. In einem Schritt W6 werden die Verfahrensschritte W4 und W5 so oft wiederholt, bis der Öffnungsgrad des elektrisch steuerbaren Ventils 30 einen maximalen Öffnungsgrad erreicht hat. In einem Schritt W7 wird der kleinste durch die Entlüftungsleitung 70 und/oder durch das Einfüllrohr 20 ausgetriebene Gasvolumenstrom unter den den unterschiedlichen Öffnungsgraden und dem eingestellten Druck zugeordneten Gasvolumenströmen ermittelt. In einem Schritt W8 wird der Öffnungsgrad, welcher dem eingestellten Druck und dem diesem Druck zugeordnete kleinste Gasvolumenstrom zugeordnet ist, als Soll-Öffnungsgrad, welcher dem eingestellten Druck zugeordnet ist, gespeichert. In einem Schritt W9 wird der Druck um einen vorgegebenen Vergrößerungswert vergrößert. In einem letzten Verfahrensschritt W10 werden die Verfahrensschritte W2 bis W9 solange wiederholt, bis der maximale Druck erreicht ist. Die so ermittelten Soll-Öffnungsgrade weisen jeweils einen für einen gegebenen Druck minimalen, durch die Entlüftungsleitung 70 und/oder durch das Einfüllrohr 20 ausgetriebenen Gasvolumenstrom auf.

Das zweite Ventil 40 ist als ein elektrisch steuerbares Ventil ausgebildet. Der Öffnungsgrad des zweiten Ventils 40 wird über das in Figur 8 im Ablaufdiagramm dargestellte Verfahren bestimmt. Zunächst wird in Schritt S4 ein Druck auf Basis von dem Druck im Betriebsflüssigkeitsbehälterinnenraums 11 und/oder auf Basis von dem Druck innerhalb des Einfüllrohrs 20 des Betriebsflüssigkeitsbehälters 10 repräsentierenden Daten, welche durch den Drucksensor 51 und/oder den Drucksensor 52 ermittelt werden, bestimmt. In Schritt S7 wird in Abhängigkeit des so ermittelten Drucks ein Soll-Öffnungsgrad des zweiten Ventils 40 bestimmt. Danach wird in Schritt S8 der Öffnungsgrad des zweiten Ventils 40 auf den ermittelten Soll-Öffnungsgrad eingestellt.

Optional können vor dem Schritt S7 noch die Schritte S2 und S3 ausgeführt werden, die mit Bezug auf Figur 4 oben beschrieben sind.

Das Verfahren wird unter Verwendung der elektronischen Steuerungseinrichtung 80 ausgeführt, die mit dem zweiten Ventil 40 über eine Datenaustauschverbindung und eine Schnittstelle 81 datengekoppelt ist. Die elektronische Steuerungseinrichtung 80 ist dazu ausgebildet, basierend auf einem Druck im Betriebsflüssigkeitsbehälterinnenraum 11 und/oder basierend auf einem Druck im Einfüllrohr 20, einen Soll-Öffnungsgrad zu ermitteln und an das zweite Ventil 40 ein derartiges Steuerungssignal auszugeben, so dass der Öffnungsgrad des zweiten Ventils 40 auf den Soll-Öffnungsgrad eingestellt wird. Der Soll-Öffnungsgrad ist dabei so ermittelt, dass der durch die Entlüftungsleitung 70 und/oder durch das Einfüllrohr 20 ausgetriebene Gasvolumenstrom minimiert ist.

Der in den Figur 1E dargestellte Betriebsflüssigkeitsbehälter 10 weist den gleichen Aufbau wie der in Figur 1B dargestellte Betriebsflüssigkeitsbehälter 10 auf, so dass auf die obige Beschreibung von Figur 1B verwiesen wird. Als Unterschied zu dem in Figur 1B dargestellten Betriebsflüssigkeitsbehälter 10 weist der in Figur 1E dargestellte Betriebsflüssigkeitsbehälter 10 anstelle des Füllstandsensors 50 eine Gasflussmesseinrichtung 53 auf, die im Einfüllrohr 20 angeordnet ist und zum Bestimmen eines Gasflusses durch das Einfüllrohr 20 ausgebildet ist.

Die Steuerungseinrichtung 80 ist mit der Gasflussmesseinrichtung 53, dem elektrisch steuerbaren Ventil 30 und dem zweiten Ventil 40 über eine Datenaustauschverbindung verbunden.

Wird der in Figur 1E dargestellte Betriebsflüssigkeitsbehälter 10 mit einer Betriebsflüssigkeit befüllt, indem eine in den Figuren nicht dargestellte Befülleinrichtung (beispielsweise ein Zapfventil einer Tanksäule) in einen Einfüllstutzen 21 des Einfüllrohrs 20 eingeschoben wird, wird ein Gasvolumenstrom aus dem Betriebsflüssigkeitsbehälterinnenraum 11 über die Rezirkulationsleitung 60 und ein weiterer Gasvolumenstrom über die Entlüftungsleitung 70 ausgetrieben.

Der über die Rezirkulationsleitung 60 ausgetriebene Gasvolumenstrom und der über die Entlüftungsleitung 70 ausgetriebene Gasvolumenstrom werden über ein Steuerungsverfahren beeinflusst. Zunächst wird in einem Verfahrensschritt ein Gasfluss durch das Einfüllrohr 20 mittels der Gasflussmesseinrichtung 53 bestimmt. In einem weiteren Verfahrensschritt wird in Abhängigkeit des so ermittelten Gasflusses ein Soll-Öffnungsgrad des elektrisch steuerbaren Ventils 30 bestimmt. Danach wird in einem weiteren Verfahrensschritt der Öffnungsgrad des elektrisch steuerbaren Ventils 30 auf den ermittelten Soll-Öffnungsgrad eingestellt.

Diese Verfahren wird unter Verwendung der elektronischen Steuerungseinrichtung 80 ausgeführt, die mit dem elektrisch steuerbaren Ventil 30 über eine Datenaustauschverbindung datengekoppelt ist. Die elektronische Steuerungseinrichtung 80 ist dazu ausgebildet, basierend auf einen Gasdurchfluss durch das Einfüllrohr 20 während der Betriebsflüssigkeitsbehälter 10 befüllt wird, einen Soll-Öffnungsgrad zu ermitteln und an das elektrisch steuerbare Ventil 30 ein derartiges Steuerungssignal auszugeben, so dass der Öffnungsgrad des elektrisch steuerbaren Ventils 30 auf den Soll-Öffnungsgrad eingestellt wird.

Die Ermittlung des Soll-Öffnungsgrads in Abhängigkeit des Drucks in Schritt S2 wird anhand eines Kennfeldes durchgeführt, wobei das Kennfeld in Form von Sollwerttabellen auf der elektronischen Steuereinheit 80 hinterlegt ist. Der Soll-Öffnungsgrad ist dabei so ermittelt, dass der durch die Entlüftungsleitung 70 und/oder durch das Einfüllrohr 20 ausgetriebene Gasvolumenstrom minimiert ist.

Das zweite Ventil 40 ist als ein elektrisch steuerbares Ventil ausgebildet. Der Öffnungsgrad des zweiten Ventils 40 wird über ein Steuerungsverfahren eingestellt. Zunächst wird in einem Verfahrensschritt ein Gasfluss im Einfüllrohr 20 bestimmt. In einem weiteren Verfahrensschritt wird in Abhängigkeit des so ermittelten Gasflusses ein Soll-Öffnungsgrad des zweiten Ventils 40 bestimmt. Danach wird in einem weiteren Verfahrensschritt der Öffnungsgrad des zweiten Ventils 40 auf den ermittelten Soll-Öffnungsgrad eingestellt.

Optional können vor dem Schritt S7 noch die Schritte S2 und S3 ausgeführt werden, die mit Bezug auf Figur 4 oben beschrieben sind.

Das Verfahren wird unter Verwendung der elektronischen Steuerungseinrichtung 80 ausgeführt, die mit dem zweiten Ventil 40 über eine Datenaustauschverbindung und eine Schnittstelle 81 datengekoppelt ist. Die elektronische Steuerungseinrichtung 80 ist dazu ausgebildet, basierend auf einen Gassfluss im Einfüllrohr 20 einen Soll-Öffnungsgrad zu ermitteln und an das zweite Ventil 40 ein derartiges Steuerungssignal auszugeben, so dass der Öffnungsgrad des zweiten Ventils 40 auf den Soll-Öffnungsgrad eingestellt wird. Der Soll-Öffnungsgrad ist dabei so ermittelt, dass der durch die Entlüftungsleitung 70 und/oder durch das Einfüllrohr 20 ausgetriebene Gasvolumenstrom minimiert ist.

### Bezugszeichenliste

- 10: Betriebsflüssigkeitsbehälter
- 11: Betriebsflüssigkeitsbehälterinnenraum
- 20: Einfüllrohr
- 21: Einfüllstutzen
- 30: Elektrisch steuerbares Ventil
- 40: Zweites Ventil
- 50: Füllstandsensor
- 51: Drucksensor
- 52: Drucksensor
- 53: Gasflussmesseinrichtung
- 60: Rezirkulationsleitung
- 70: Entlüftungsleitung
- 71: Aktivkohlefiltereinrichtung
- 80: Steuereinrichtung
- 81: Schnittstelle
- 90: Atmosphäre

## Patentansprüche

1. Verfahren zum Befüllen eines Betriebsflüssigkeitsbehälters (10), wobei der Betriebsflüssigkeitsbehälter (10) folgende Merkmale aufweist:
- ein Betriebsflüssigkeitsbehälterinnenraum (11) ist über ein Einfüllrohr (20) mit einer Betriebsflüssigkeit befüllbar;
- der Betriebsflüssigkeitsbehälterinnenraum (11) ist mittels einer Rezirkulationsleitung (60) mit dem Einfüllrohr (20) fluidverbunden;
- der Betriebsflüssigkeitsbehälter (10) weist ein elektrisch steuerbares Ventil (30) auf, das in der Rezirkulationsleitung (60) angeordnet ist und zwischen einer Offenstellung und einer Schließstellung verstellbar ist;
- der Betriebsflüssigkeitsbehälter (10) weist eine Entlüftungsleitung (70) auf, die den Betriebsflüssigkeitsbehälterinnenraum (11) zumindest mittelbar mit der Atmosphäre fluidverbindet,
wobei das Verfahren folgende Verfahrensschritte aufweist:
- Ermitteln (S1) einer Befüllrate während eines Befüllvorgangs des Betriebsflüssigkeitsbehälters (10);
- Ermitteln (S2) eines Soll-Öffnungsgrades des elektrisch steuerbaren Ventils (30) in Abhängigkeit der Befüllrate; und
- Einstellen (S3) des Öffnungsgrades des elektrisch steuerbaren Ventils (30) auf den Soll-Öffnungsgrad.

2. Verfahren nach Anspruch 1, wobei der Betriebsflüssigkeitsbehälter (10) einen Füllstandsensor (50) im Betriebsflüssigkeitsbehälterinnenraum (11) aufweist, **dadurch gekennzeichnet, dass** das Ermitteln (S1) der Befüllrate unter Verwendung von den Füllstand des Betriebsflüssigkeitsbehälters (10) repräsentierenden Daten, die durch den Füllstandsensor (50) bereitgestellt werden, erfolgt.

3. Verfahren nach einem der vorangegangenen Ansprüche, wobei der Betriebsflüssigkeitsbehälter (10) ein zweites Ventil (40) aufweist, das in der Entlüftungsleitung (70) angeordnet ist, wobei das Verfahren durch folgende Verfahrensschritte **gekennzeichnet** ist:
- Ermitteln (S5) eines Soll-Öffnungsgrades des zweiten Ventils (40) in Abhängigkeit der Befüllrate; und
- Einstellen (S6) des Öffnungsgrades des zweiten Ventils (40) auf den Soll-Öffnungsgrad.

4. Verfahren zum Befüllen eines Betriebsflüssigkeitsbehälters (10), wobei der Betriebsflüssigkeitsbehälter (10) folgende Merkmale aufweist:
- ein Betriebsflüssigkeitsbehälterinnenraum (11) ist über ein Einfüllrohr (20) mit einer Betriebsflüssigkeit befüllbar;
- der Betriebsflüssigkeitsbehälterinnenraum (11) ist mittels einer Rezirkulationsleitung (60) mit dem Einfüllrohr (20) fluidverbunden;
- der Betriebsflüssigkeitsbehälter (10) weist ein elektrisch steuerbares Ventil (30) auf, das in der Rezirkulationsleitung (60) angeordnet ist und zwischen einer Offenstellung und einer Schließstellung verstellbar ist;
- der Betriebsflüssigkeitsbehälter (10) weist eine Entlüftungsleitung (70) auf, die den Betriebsflüssigkeitsbehälterinnenraum (11) zumindest mittelbar mit der Atmosphäre fluidverbindet,
wobei das Verfahren folgende Verfahrensschritte aufweist:
- Ermitteln (S4) eines Drucks innerhalb des Betriebsflüssigkeitsbehälterinnenraums (11) und/oder innerhalb des Einfüllrohrs (20) während eines Befüllvorgangs;
- Ermitteln (S2) eines Soll-Öffnungsgrades des elektrisch steuerbaren Ventils (30) in Abhängigkeit des Drucks; und
- Einstellen (S3) des Öffnungsgrades des elektrisch steuerbaren Ventils (30) auf den Soll-Öffnungsgrad.

5. Verfahren nach Anspruch 4, wobei der Betriebsflüssigkeitsbehälter (10) einen Drucksensor (51) im Betriebsflüssigkeitsbehälterinnenraum (11) und/oder einen Drucksensor (52) im Einfüllrohr (20) aufweist, **dadurch gekennzeichnet, dass** das Ermitteln (S1) eines Drucks unter Verwendung von den Druck im Betriebsflüssigkeitsbehälterinnenraum (11) des Betriebsflüssigkeitsbehälters (10) repräsentierenden Daten, die durch den Drucksensor (51) bereitgestellt werden, und/oder unter Verwendung von den Druck im Einfüllrohr (20) repräsentierenden Daten, die durch den Drucksensor (52) bereitgestellt werden, erfolgt.

6. Verfahren nach Anspruch 4 oder Anspruch 5, wobei der Betriebsflüssigkeitsbehälter (10) ein zweites Ventil (40) aufweist, das in der Entlüftungsleitung (70) angeordnet ist, wobei das Verfahren durch folgende Verfahrensschritte **gekennzeichnet** ist:
- Ermitteln (S7) eines Soll-Öffnungsgrades des zweiten Ventils (40) in Abhängigkeit des Drucks; und
- Einstellen (S8) des Öffnungsgrades des zweiten Ventils (40) auf den Soll-Öffnungsgrad.

7. Verfahren zum Befüllen eines Betriebsflüssigkeitsbehälters (10), wobei der Betriebsflüssigkeitsbehälter (10) folgende Merkmale aufweist:
- ein Betriebsflüssigkeitsbehälterinnenraum (11) ist über ein Einfüllrohr (20) mit einer Betriebsflüssigkeit befüllbar;
- der Betriebsflüssigkeitsbehälterinnenraum (11) ist mittels einer Rezirkulationsleitung (60) mit dem Einfüllrohr (20) fluidverbunden;
- der Betriebsflüssigkeitsbehälter (10) weist ein elektrisch steuerbares Ventil (30) auf, das in der Rezirkulationsleitung (60) angeordnet ist und zwischen einer Offenstellung und einer Schließstellung verstellbar ist;
- der Betriebsflüssigkeitsbehälter (10) weist eine Entlüftungsleitung (70) auf, die den Betriebsflüssigkeitsbehälterinnenraum (11) zumindest mittelbar mit der Atmosphäre fluidverbindet,
wobei das Verfahren folgende Verfahrensschritte aufweist:
- Ermitteln (S10) eines aus dem Einfüllrohr (20) ausgetriebenen Gasvolumenstroms während eines Befüllvorgangs;
- Ermitteln (S11) eines Soll-Öffnungsgrades des elektrisch steuerbaren Ventils (30) in Abhängigkeit des Gasvolumenstroms; und
- Einstellen (S12) des Öffnungsgrades des elektrisch steuerbaren Ventils (30) auf den Soll-Öffnungsgrad.

8. Verfahren nach einem der vorangegangenen Ansprüche, **dadurch gekennzeichnet, dass** der Soll-Öffnungsgrad des elektrisch steuerbaren Ventils (30) und/oder des zweiten Ventils (40) so ermittelt und eingestellt ist, dass ein aus der Entlüftungsleitung (70) ausgetriebener Gasvolumenstrom minimiert ist.

9. Verfahren nach einem der vorangegangenen Ansprüche, **dadurch gekennzeichnet, dass** der Soll-Öffnungsgrad des elektrisch steuerbaren Ventils (30) und/oder des zweiten Ventils (40) so ermittelt ist, dass ein aus dem Einfüllrohr (20) an die Atmosphäre ausgetriebener Gasvolumenstrom minimiert ist.

10. Verfahren nach einem der vorangegangenen Ansprüche, **dadurch gekennzeichnet, dass** das Ermitteln (S2) eines Soll-Öffnungsgrades des elektrisch steuerbaren Ventils (30) durch Abrufen von in Datentabellen hinterlegten Werten für den Soll-Öffnungsgrad des elektrisch steuerbaren Ventils (30) erfolgt.

11. Betriebsflüssigkeitsbehälter (10) wobei der Betriebsflüssigkeitsbehälter (10) folgende Merkmale aufweist:
- ein Betriebsflüssigkeitsbehälterinnenraum (11) ist über ein Einfüllrohr (20) mit einer Betriebsflüssigkeit befüllbar;
- der Betriebsflüssigkeitsbehälterinnenraum (11) ist mittels einer Rezirkulationsleitung (60) mit dem Einfüllrohr (20) fluidverbunden;
- der Betriebsflüssigkeitsbehälter (10) weist ein elektrisch steuerbares Ventil (30) auf, das in der Rezirkulationsleitung (60) angeordnet ist und zwischen einer Offenstellung und einer Schließstellung verstellbar ist;
- der Betriebsflüssigkeitsbehälter (10) weist eine Entlüftungsleitung (70) auf, die den Betriebsflüssigkeitsbehälterinnenraum (11) zumindest mittelbar mit der Atmosphäre fluidverbindet;
- der Betriebsflüssigkeitsbehälter (10) weist einen Füllstandsensor (50) und/oder einen Drucksensor (51) auf, der im Betriebsflüssigkeitsbehälterinnenraum (11) angeordnet ist, und/oder einen Drucksensor (52) auf, der im Einfüllrohr (20) angeordnet ist,
**dadurch gekennzeichnet, dass** der Betriebsflüssigkeitsbehälter eine elektronische Steuerungseinrichtung (80) und/oder eine Schnittstelle (81) zu einer elektronischen Steuerungseinrichtung (80) aufweist, die dazu ausgebildet ist, ein Verfahren nach einem der Ansprüche 1 - 10 auszuführen.

12. Betriebsflüssigkeitsbehälter (10) nach Anspruch 11, **dadurch gekennzeichnet, dass** der Betriebsflüssigkeitsbehälter (10) ein zweites Ventil (40) aufweist, das in der Entlüftungsleitung (70) angeordnet ist.

13. Betriebsflüssigkeitsbehälter (10) nach Anspruch 11 oder 12, **dadurch gekennzeichnet, dass** das zweite Ventil (40) als ein elektrisch steuerbares Ventil ausgebildet ist.

14. Betriebsflüssigkeitsbehälter (10) nach einem der Ansprüche 11 - 13, **dadurch gekennzeichnet, dass** das elektrisch steuerbare Ventil (30) und das zweite Ventil (40) als ein Bauteil ausgebildet sind.

15. Betriebsflüssigkeitsbehälter (10) nach Anspruch 12, **dadurch gekennzeichnet, dass** das zweite Ventil (40) als nicht gesteuertes Ventil ausgebildet ist, wobei die Steuerungseinrichtung (80) dazu ausgebildet ist, ein Verfahren nach einem der Ansprüche 1 - 2 oder 4 - 5 oder 8 - 10 auszuführen.

16. Kraftfahrzeug aufweisend einen Betriebsflüssigkeitsbehälter (10) nach einem der Ansprüche 11 - 15.
